# EUROPÄISCHE PATENTSCHRIFT

(11) **EP 3 298 272 B1**
(45) Veröffentlichungstag und Bekanntmachung des Hinweises auf die Patenterteilung: **08.07.2020**
(21) Anmeldenummer: 16720108.6
(22) Anmeldetag: 29.04.2016
(51) Int. Cl.: F03D 7/02, F03D 17/00

(54) **MESSANORDNUNG AN EINER WINDENERGIEANLAGE**
MEASURING ASSEMBLY ON A WIND TURBINE
DISPOSITIF DE MESURE SITUÉ SUR UNE ÉOLIENNE

(30) Priorität: 19.05.2015 DE 102015209109
(43) Veröffentlichungstag der Anmeldung: 28.03.2018
(73) Patentinhaber: Wobben Properties GmbH, 26607 Aurich (DE)
(72) Erfinder: LEBOSQ, Rodolphe, 26603 Aurich (DE)
(74) Vertreter: Eisenführ Speiser
(86) Internationale Anmeldenummer: PCT/EP2016/059682
(87) Internationale Veröffentlichungsnummer: WO 2016/184665

(56) Entgegenhaltungen:
- EP-A1- 2 653 721
- WO-A1-2008/129112
- US-A1- 2007 212 209
- US-A1- 2013 189 102

## Beschreibung

Die vorliegende Erfindung betrifft eine Messanordnung einer Windenergieanlage zum Erfassen von Windverhältnissen, sowie ein Verfahren zum Erfassen von Windverhältnissen und ein Verfahren zum Betreiben einer Windenergieanlage. Ferner umfasst die vorliegende Erfindung eine Windenergieanlage.

Windenergieanlagen, die aus der kinetischen Energie des Windes elektrische Energie erzeugen und in ein elektrisches Stromnetz einspeisen sind allgemein bekannt.

Zur Steuerung solcher Windenergieanlagen ist es hilfreich, wenn die an der Windenergieanlage vorherrschenden Windverhältnisse, beispielsweise die Windgeschwindigkeit und/oder die Windrichtung, bekannt sind.

Je genauer die Windverhältnisse bestimmt werden können, desto besser, besonders wirtschaftlicher und/oder netzstützender kann eine solche Windenergieanlage betrieben werden.

Entscheidend für den Ertrag einer Windenergieanlage ist insbesondere der durch die Rotorkreisfläche einer Windenergieanlage strömende Volumenstrom des Windes, der auch als Windvolumenstrom bezeichnet wird. Unter der Rotorkreisfläche, die auch als Rotorfläche bezeichnet wird, ist die Kreisfläche zu verstehen, die die Rotorblätter einer Windenergieanlage im Betrieb überstreicht. Um den Wind möglichst gut auszunutzen wird die Windenergieanlage in ihrer Azimut-Stellung dem Wind nachgeführt. Das erfolgt durch eine sogenannte Azimut-Steuerung, die zum Steuern meist eine Windrichtung auf der Gondel der Windenergieanlage erfasst. Hierbei wurden die Windverhältnisse früher meist durch mechanische Anemometer und/oder Anemoskope erfasst.

Es ist bekannt, dass die an einer Windenergieanlage vorherrschenden Windverhältnisse sogenannte "wind-veer"- und "wind-shear"-Effekte aufweisen können, die einen sehr großen Einfluss auf den Betrieb der Windenergieanlage haben können.

Solche Variationen des Windes können mittels eines Anemometers und/oder eines Anemoskops auf der Gondel nicht erfasst werden. Dies kann zur Folge haben, dass eine so betriebene Windenergieanlage nicht optimal, besonders mit einem zu niedrigen Leistungsbeiwert bzw. Wirkungsgrad betrieben wird.

Aus der DE 10 2012 210 150 A1 ist beispielsweise der Einsatz von Mikro- und Radarwellentechnik zur Erfassung von Windverhältnissen bekannt. Ferner ist dem Fachmann auch der Einsatz von LiDAR- und SODAR-Verfahren, also Laser-gestützten bzw. akustischen Fernmessverfahren zur Erfassung von Windverhältnissen bekannt.

Nachteilig bei dem Einsatz solcher Fernmessverfahren im Bereich der Windenergieanlagen sind insbesondere der hohe technische Aufwand und die damit verbundenen Kosten. Auf Grund der hohen Kosten beispielsweise über 100.000€ für ein bodenbasiertes LiDAR-Gerät, werden LiDAR-Geräte meist nur einmalig, als mobile Einrichtungen, zur Standortzertifizierung eingesetzt. Demnach werden der "wind-shear" und der "wind-veer" für den jeweiligen Standort einmalig starr festgelegt und eine Betriebskennlinie an Hand dieser starren Festlegung für den jeweiligen Standort konzipiert.

Das Deutsche Patent- und Markenamt hat in der Prioritätsanmeldung zu vorliegender Anmeldung außerdem folgenden Stand der Technik recherchiert: US 2013/0272877 A1 und WO 02/079645 A1. Weiterer Stand der Technik ist bekannt aus US 2013/0189102 A1.

Der Erfindung liegt daher die Aufgabe zugrunde, wenigstens eines der vorgenannten Probleme zu adressieren. Insbesondere soll der Stand der Technik verbessert werden und eine Lösung vorgeschlagen werden, die ein möglichst gutes Messen und/oder Berücksichtigen von "wind-shear" und "wind-veer" ermöglicht und somit insbesondere für einen wirtschaftlichen Einsatz im Bereich der Windenergieanlagen geeignet ist. Möglichst soll die vorliegende Erfindung "wind-shear"- und "wind-veer"-Effekte erfassen können, ohne zuvor den Standort, ggf. tageszeitabhängig, vermessen zu müssen. Es soll zumindest eine Alternative zu bisherigen Lösungen vorgeschlagen werden.

Erfindungsgemäß wird somit eine Messanordnung gemäß Anspruch 1 vorgeschlagen, sowie ein Verfahren zum Erfassen von Windverhältnissen gemäß Anspruch 9. Ferner wird erfindungsgemäß ein Verfahren zum Betreiben einer Windenergieanlage gemäß Anspruch 10 sowie eine Windenergieanlage gemäß Anspruch 17 vorgeschlagen.

Gemäß Anspruch 1 wird somit eine Messanordnung einer einen Turm und einen aerodynamischen Rotor mit wenigstens einem Rotorblatt aufweisenden Windenergieanlage zum Erfassen von Windverhältnissen vorgeschlagen, wobei die Messanordnung wenigstens eine erste und eine zweite Messvorrichtung zum Anordnen am Turm in unterschiedlichen Höhen aufweist und jede Messvorrichtungen dazu vorbereitet ist, in der jeweiligen Höhe, in der sie angeordnet ist, zu unterschiedlichen horizontalen Richtungen Windwerte zu erfassen, die repräsentativ für einen Winddruck aus der jeweiligen Richtung sind. Besonders wird hierunter ein Wert verstanden, der an der Messvorrichtung einen Druck bzw. Druckverlauf hervorruft, von dem ausgegangen wird, dass er durch den Wind erzeugt wird. Im einfachsten Fall wird eine Druckmessung vorgenommen.

Die Messanordnung zum Erfassen von Windverhältnissen umfasst demnach wenigstens zwei Messvorrichtungen, wobei jede Messvorrichtung wenigstens einen Messaufnehmer zum Erzeugen wenigstens eines Messsignals aufweist. Eine Messanordnung gemäß Anspruch 1 erzeugt somit wenigstens zwei parallele und im Wesentlichen zeitgleiche Messsignale, wobei die wenigstens zwei Messsignale repräsentativ zum Winddruck sind. Sie können z.B. unmittelbar den Winddruck angeben, oder ein proportionales Signal sein, um nur zwei Beispiele zu nennen.

Um Messsignale repräsentativ zu einem Winddruck zu erzeugen, wird beispielsweise in einer Ausführungsform vorgeschlagen, dass die Messvorrichtung zum Erfassen von Windverhältnissen als Drucksensor ausgebildet ist bzw. einen, mehrere oder viele Drucksensoren, oder andere Sensoren, aufweist. Es kommen bspw. auch Nanosensoren in Betracht.

Zudem wird vorgeschlagen, dass die Messvorrichtungen so ausgebildet sind, dass sie an einem Turm, der auch ein Mast sein kann, angebracht werden können. Sie können z.B. aufgeklebt werden und dafür eine Klebschicht aufweisen. Dabei müssen sie aber auch in der Messanordnung zusammen wirken. Zumindest müssen sie so gekoppelt sein, dass ihre Messwerte gemeinsam ausgewertet werden.

Durch ein Anordnen der Messvorrichtungen am Turm in unterschiedlichen Höhen und ein Erfassen von Windwerten in horizontaler Richtung, also in unterschiedlichen Himmelsrichtungen, einschließlich Zwischenrichtungen, ist die Messanordnung dazu vorbereitet Variationen der Windverhältnisse in Abhängigkeit der Höhe zu erfassen. Durch die Erfassung unterschiedlicher Windrichtungen in Abhängigkeit der Höhe kann somit die Variation der Windrichtung mit der Höhe erfasst werden, also wenigstens ein wind-veer-Wert. Durch die Erfassung der Amplitude des Winddrucks und damit einer Windgeschwindigkeit in unterschiedlichen Höhen kann wenigstens ein sogenannter wind-shear-Wert erfasst werden.

Zudem können die Messvorrichtungen jeder Höhe mehrere Messaufnehmer aufweisen. Durch eine Verteilung dieser Messaufnehmer, besonders über den Umfang des Turms, können Veränderungen von horizontalen Windverhältnissen, insbesondere Windrichtungen, gut erfasst werden.

Vorzugsweise sind die Messaufnehmer einer jeden Messvorrichtung so ausgebildet, dass sie den Wind bzw. die Windverhältnisse um den Turm herum, in einem 360°--Profil horizontaler Richtung, also rund um den Turm herum, vollständig erfassen können, um dann auch ein 360°-Profil erstellen und auswerten zu können.

Die so erzeugten wenigstens zwei Wind-Charakteristika bzw. horizontalen Windprofile können durch eine Rechen- und/oder Auswerteeinheit zu einer dreidimensionalen Windkarte oder einem anderen, die erfassten Windverhältnisse zusammenfassenden Datensatz verarbeitet werden. Eine solche dreidimensionale Windkarte bildet hierbei die Windverhältnisse im Bereich der Windenergieanlage, insbesondere im Bereich der Rotorkreisfläche, vektoriell ab.

Es wird vorgeschlagen, die erfassten Windverhältnisse bzw. Winddaten, insbesondere die genannte dreidimensionale Windkarte oder den anderen, die erfassten Windverhältnisse zusammenfassenden Datensatz, zur Steuerung der Windenergieanlage zu verwenden. Insbesondere können solche Winddaten ausgewertet und anschließend daraus abgeleitete Steuerwerte an eine Azimut- und/oder eine Pitchsteuerung der Windenergieanlage weitergegeben werden.

Vorzugsweise wird vorgeschlagen, eine dritte Messvorrichtung am Turm anzuordnen, um die Genauigkeit und/oder die Informationstiefe zu verbessern. Zur noch weiteren Verbesserung der Erfassungsgenauigkeit werden eine vierte oder sogar fünfte oder noch weitere Messvorrichtungen vorgeschlagen. Für turbulente Standorte oder Windenergieanlagen mit großen Rotordurchmessern werden drei, vier, fünf oder mehr Messvorrichtungen und damit Messvorrichtungen in drei, vier, fünf oder noch mehr unterschiedlichen Höhen vorgeschlagen.

Vorzugsweise sind wenigstens die erste und die zweite Messvorrichtung zum Anordnen um den Turm herum vorbereitet. Die erste und die zweite Messvorrichtung der Messanordnung umschließen den Turm dann im Wesentlichen horizontal. Dafür kann jede Messvorrichtung bspw. als Band vorgesehen sein, das in einer entsprechenden Höhe um den Turm gelegt wird. Es kann bspw. als Band mit vielen verteilten Sensoren ausgebildet sein und insbesondere wie ein Klebeband einmal um den Turm herum geklebt werden. Es kommen aber auch andere Befestigungen in Betracht.

Statt eines Bandes, das den Turm vollständig umschließt, können auch verteilte und separat angeordnete Sensoren jeweils eine Messvorrichtung in einer Höhe bilden. Im Wesentlichen soll die Messvorrichtung dazu vorbereitet sein, die Windverhältnisse um den Turm herum in horizontaler Richtung für 360°abzubilden bzw. dazu die Daten aufzunehmen, die ein solches Bild geben können. Es können auch sehr viele Sensoren, z.B. 100 Sensoren, um ein anschauliches Beispiel zu nennen, dicht an dicht vorgesehen sein, die quasi-kontinuierlich angeordnet sind und mit einer quasi-kontinuierlichen Ortsverteilung Messwerte aufnehmen.

Insbesondere durch einen ringförmigen und/oder bandähnlichen Aufbau sind die Messvorrichtungen dazu vorbereitet, die Windverhältnisse in 360° Grad horizontaler Richtung zu erfassen.

Bevorzugt sind wenigstens die erste und die zweite Messvorrichtung dazu vorbereitet, als Windwert jeweils den Winddruck zu erfassen, also die Kraft des Windes bzw. die Windlast die auf die jeweilige Oberfläche des jeweiligen Messaufnehmers einwirkt. Daraus lässt sich die Windrichtung und die Windstärke bzw. Windgeschwindigkeit ableiten. Eine Messvorrichtung kann somit Windrichtung und Windstärke zugleich erfassen.

Gemäß Anspruch 1 umfasst jede Messvorrichtung eine Drucksensorfolie, die dazu vorbereitet ist, einen richtungsabhängigen Druckverlauf zu erfassen.

Eine solche Drucksensorfolie kann viele Sensoren aufweisen, insbesondere so viele, dass sie sich wie ein großer, örtlich verteilter Drucksensor verhält, der ortsabhängige Druckwerte erfassen kann. Gemäß einer Ausführungsform nimmt sie quasi-kontinuierlich über die horizontale Richtung verteilte Messwerte auf.

Drucksensorfolien sind im Wesentlichen besonders dünn ausgebildete, in Bahnen hergestellte Messaufnehmer bzw. Messsensoren, die durch ihre Beschaffenheit eine besonders einfache Installation am Turm einer Windenergieanlage ermöglichen. So wird vorzugsweise vorgeschlagen, die Drucksensorfolie durch ein einfaches Aufkleben am Turm zu befestigt. So kann sie den Verlauf des Windruckes richtungsabhängig, insbesondere über 360° Grad horizontaler Richtung, durchgehend bzw. quasi-durchgehend erfassen.

Gemäß einer weiteren Ausführungsform ist die Drucksensorfolie eine piezoelektrische Folie oder eine Nanosensorfolie.

Bei piezoelektrischen Folien, auch Piezo-Film-Sensor genannt, wird mittels Druck eine elektrische Spannung erzeugt, die proportional zur Kraft ist. Demnach verwenden piezoelektrische Folien den sogenannten piezoelektrischen Effekt. Nanosensorfolien hingegen erzeugen eine zum Druck repräsentative Spannung, die nicht auf dem piezoelektrischen Effekt beruht. Sowohl die durch den Nanosensor als auch die durch den Piezo-Film-Sensor erzeugte elektrische Spannung kann mittels Ladungsverstärker und/oder Membranen zu einem Messwert repräsentativ zum Winddruck aufbereitet werden.

Besonders vorteilhaft bei der Verwendung von piezoelektrischen Drucksensorfolien ist, dass die piezoelektrische Folien, genau wie die Nanosensorfolien, sehr robust gegenüber Umwelteinflüssen sind und somit an fast allen Windenergieanlagenstandorten der Welt eingesetzt werden können. Zudem weisen piezoelektrische Folien genau wie Nanosensorfolien eine hohe chemische Trägheit auf, was zu einem geringen Wartungsaufwand führt.

Als eine Ausgestaltung wird vorgeschlagen, dass die erste Messvorrichtung in einer Höhe am Turm angeordnet ist, in der die Blattspitze den Turm beim Drehen des Rotors passiert. Damit können Windwerte für den unteren Rand der Rotorfläche aufgenommen werden.

Besonders zusammen mit einer weiteren Messvorrichtung unmittelbar unterhalb der Gondel und/oder Nabe der Windenergieanlage kann zunächst fast die untere Hälfte der Rotorkreisfläche messtechnisch abgedeckt werden. Bereiche oberhalb der Gondel können extrapoliert werden.

Gemäß einer weiteren Ausführungsform wird daher auch vorgeschlagen, die zweite Messvorrichtung oberhalb der ersten Messvorrichtung, insbesondere direkt unterhalb der Gondel der Windenergieanlage anzuordnen.

Bevorzugt weist die Messanordnung wenigstens eine dritte Messvorrichtung auf, die bestimmungsgemäß am Turm in einer Höhe zwischen der ersten und der zweiten Messvorrichtung angeordnet wird, vorzugsweise mittig dazwischen.

Dadurch kann besonders die Genauigkeit der Bestimmung einer Windverteilung mit der Höhe verbessert werden. Durch Interpolation können Werte in Höhen zwischen den Messvorrichtungen berechnet werden.

Vorzugsweise wird aus den Werten, die die Messanordnung aufnimmt, wenigstens ein Wert einer Windscherung über die Höhe bestimmt bzw. berechnet, was synonym auch als wind-shear-Wert bezeichnet werden kann und/oder es wird wenigstens ein Wert einer Windrichtungsänderung über die Höhe bestimmt bzw. berechnet, der auch als wind-veer-Wert synonym bezeichnet werden kann. Vorzugsweise wird beides bestimmt bzw. berechnet und/oder jeweils eine höhenabhängige Funktion bestimmt.

Änderungen der Windgeschwindigkeit mit der Höhe, sogenannte Windscherungen, die auch als wind-shear bezeichnet werden und/oder Änderungen der Windrichtung mit der Höhe, die auch als wind-veer bezeichnet werden, können somit auf einfache und kostengünstige Art und Weise bestimmt werden und zur Verbesserung der Anlagensteuerung eingesetzt werden. Häufig nimmt die Windgeschwindigkeit mit der Höhe zu, es kann aber grundsätzlich auch möglich sein, dass die Windgeschwindigkeit mit steigender Höhe abnimmt. Bereits die Verwendung einer Kenngröße, also eines wind-veer-Werte oder eines wind-shear-Wertes, kann hier hilfreich sein. Durch die Aufstellung jeweils einer Funktion in Abhängigkeit der Höhe kann die Auswertung verbessert werden. Eine solche Funktion kann bspw. eine Polynomfunktion 2. Ordnung sein, die basierend auf jeweils drei Werten, nämlich eines Wertes je Messvorrichtung, wenn drei Messvorrichtungen verwendet werden, parametriert werden.

Vorzugsweise wird vorgeschlagen, aus den Werten, die die Messanordnung aufnimmt, ein Maß für eine Windturbulenz zu bestimmen. Hierbei können zusätzlich zu Windschwankungen an einem Messsensor Windschwankungen über die Höhe und/oder Windrichtungsschwankungen in unterschiedlichen Höhen ausgewertet werden.

Durch ein Erfassen von Windwerten in unterschiedlichen horizontalen Richtungen und in unterschiedlichen Höhen ist es möglich Verwirbelungen der bodennahen atmosphärischen Grenzschicht, sogenannte Windturbulenzen, zu erfassen. Insbesondere werden hierzu eine Windgeschwindigkeits- und Windrichtungsänderung über die Höhe bestimmt. Ferner können aus den so durch die Messanordnung erfassten Windwerten eine Turbulenzintensität und/oder ein Böenfaktor bestimmt werden.

Erfindungsgemäß wird auch ein Verfahren zum Erfassen einer Windverteilung bei einer einen Turm und einen aerodynamischen Rotor mit wenigstens einem Rotorblatt aufweisenden Windenergieanlage vorgeschlagen, wobei Windwerte am Turm in unterschiedlichen Höhen erfasst werden und in den unterschiedlichen Höhen zu unterschiedlichen horizontalen Richtungen richtungsabhängige Windwerte aufgenommen werden. Die so aufgenommenen richtungsabhängigen Windwerte sind dabei repräsentativ für einen Winddruck aus der jeweiligen horizontalen Richtung. Es wird vorgeschlagen das Verfahren so zu betreiben, wie sich aus den Erläuterungen zu wenigstens einer der vorstehenden Ausführungsformen der Messanordnung ergibt.

Ein besonderer technischer Vorteil des vorgeschlagenen Verfahrens ist es, dass nun wind-shear- und wind-veer-Werte oder Funktionen ohne Einsatz komplizierter und teurer Spezialmessvorrichtungen aufgenommen werden können. Dadurch wird es möglich, solche Windverhältniswerte bei jeder Windenergieanlage aufzunehmen und sogar grundsätzlich für jede Windenergieanlage eine solche Verbesserung zu implementieren.

Erfindungsgemäß wird ferner ein Verfahren zum Betreiben, insbesondere zum Steuern, einer Windenergieanlage vorgeschlagen, wobei die Windenergieanlage in Abhängigkeit einer Windverteilung betrieben wird, die gemäß wenigstens einer vorstehend erläuterten Ausführungsform ermittelt wird.

Die erfassten Windwerte, insbesondere die Windgeschwindigkeit und die Windrichtung und die daraus resultierende Windgeschwindigkeitsänderung über die Höhe und/oder die Windrichtungsänderung über die Höhe können dazu verwendet werden die Windenergieanlage so zu steuern, dass die Windenergieanlage mittels der Azimut- und/oder Pitchsteuerung in einem gewünschten, insbesondere stabilen, Arbeitspunkt optimal betrieben wird. Für die Pitchsteuerung kommt auch in Betracht, die Rotorblätter individuell zu steuern, nämlich ihre Pitchwinkel, je nach Position des jeweiligen Blattes und der erfassten, höhenabhängigen Windsituation einzustellen. Vorzugsweise können umlaufspezifische Werte für den Pitchwinkel aus den höhenabhängig erfassten Windwerten abgeleitet oder berechnet werden.

Vorzugsweise wird wenigstens in der ersten und der zweiten Höhe jeweils eine Windrichtung ermittelt und daraus eine Windrichtungsänderung über die Höhe (wind-veer) qualitativ und/oder quantitativ bestimmt wird.

Gemäß einer Ausführungsform wird vorgeschlagen, in der jeweiligen Höhe der Messvorrichtung die horizontale Richtung mit dem größten Windwert als Windrichtung der jeweiligen Höhe anzunehmen.

Beim Erfassen von Windwerten horizontaler Richtungen, wobei die Windwerte repräsentativ zu einem Winddruck sind, kann mit hinreichender Genauigkeit der größte Windwert als Windrichtung angenommen werden.

Unter dem größten Windwert bzw. der Amplitude der erfassten Windwerte ist das globale Maximum der Messwerte in der jeweiligen Höhe zu verstehen, das repräsentativ zum Wind ist. So können beispielsweise an einer Messvorrichtung auch lokale Maxima durch Rauschen auftreten, die durch Mess- und/oder Signalfehler verursacht wurden und nicht repräsentativ zum Wind sind. Um die Annahme falscher Werte als Amplitude zu verhindern, können beispielsweise Filter verwendet werden oder die Messsignale anderweitig aufgearbeitet werden.

Ferner ist der größte Windwert nicht auf einen einzelnen Messwert beschränkt, sondern es kann auch der größte Wert aus einer Mittelung aller erfassten Werte der jeweiligen Höhe sein, beispielsweise durch gleitende Durchschnitte. Auch wenn in der Windrichtung ein lokales Minimum in einem engen Bereich zwischen zwei Maxima liegt, kann durch eine Mittelung oder andere Filterung ein einziges Maximum gebildet werden, das die Windrichtung anzeigt.

Eine Ausgestaltung sieht vor, wenigstens in der ersten und zweiten Höhe eine Windgeschwindigkeit zu ermitteln und daraus eine Windscherung über die Höhe abzuleiten, also wenigstens einen wind-shear-Wert.

Vorzugsweise wird eine Windgeschwindigkeit der jeweiligen Höhe jeweils aus dem größten Windwert der jeweiligen Höhe abgeleitet, also aus allen in der jeweiligen Höhe über 360° aufgenommenen Windwerten.

Die in der jeweiligen Höhe erfassten Windwerte bilden eine Art Windprofil aus, wobei das Windprofil die Strömung des Windes am Turm in der jeweiligen Höhe widergibt. Ferner weisen die erfassten Windwerte in der jeweiligen Höhe genau ein Maximum bzw. eine Amplitude auf, die repräsentativ zur Windrichtung ist bzw. diese anzeigt.

Aus diesen zur Windrichtung repräsentativen Amplituden bzw. den größten Windwerten wird jeweils eine entsprechende Windgeschwindigkeit für die jeweilige Höhe abgeleitet. Hierfür wird beispielsweise die durch den Winddruck erzeugte Referenzspannung einer Drucksensormessfolie durch eine Rechen- und/oder Auswerteeinheit in eine Windgeschwindigkeit umgerechnet.

Vorzugsweise wird aus der Windrichtungsänderung über die Höhe, also dem wind-veer und/oder der Windscherung über die Höhe, also dem wind-shear ein wind-veer-Profil bzw. ein wind-shear-Profil für eine Rotorkreisfläche der Windenergieanlage berechnet, insbesondere durch Inter- und/oder Extrapolieren.

Durch wenigstens zwei in unterschiedlicher Höhe erfasste Windrichtungsänderungen und/oder Windscherungen ist es möglich, die Windrichtungsänderung und/oder Windscherung über die Höhe für die vom Wind durchflutete Rotorkreisfläche hochzurechnen.

Für so eine Hochrechnung können die erfassten Windwerte beispielsweise über die Rotorkreisfläche extrapoliert und/oder interpoliert werden. Dies kann sowohl numerisch, als auch durch vorgegebene Polynome n-ter Ordnung erfolgen.

Mit zunehmender Anzahl von Werten, besonders auch über die Höhe verteilten Messvorrichtungen, gewinnt die Extrapolation bzw. Interpolation an Genauigkeit. Die durch Extrapolation bzw. Interpolation erstellten Profile können auch als wind-veer- bzw. wind-shear-Profil bezeichnet werden, da sie den wind-veer- bzw. wind-shear-Effekt für die gesamte Rotorkreisfläche einer Windenergieanlage abbilden können.

Vorzugsweise wird abhängig von wenigstens einem wind-shear-Wert und/oder einen wind-veer-Wert und/oder ein wind-shear-Profil und/oder ein wind-veer-Profil wenigstens ein Azimut- und/oder ein Pitchwinkel der Windenergieanlage verändert.

Mittels der aus den Werten abgeleiteten Größen bzw. Kriterien über die Windscherung bzw. die Windrichtungsänderung über die Höhe ist es möglich, die Steuerung der Windenergieanlage zu verbessern. Hierfür wird beispielsweise ein wind-shear- oder wind-veer-Wert mit einem Look-Up-Table abgeglichen. Als Rückgabe aus dem Look-Up-Table dienen beispielsweise empirisch ermittelte Azimut- oder Pitchwinkel, die, nach dem sie abgerufen worden sind, als Führungs- oder Stellgröße verwendet werden. Gemäß einer anderen Ausführungsform fließen die ermittelten wind-shear- und/oder wind-veer-Profile als Störgröße in die Azimut- und/oder Pitchsteuerung der Windenergieanlage.

Vorzugsweise wird für die vorgeschlagenen Verfahren eine Messanordnung gemäß wenigstens einer vorstehend beschriebenen Ausführungsform verwendet.

Insbesondere die Verwendung von drei Messvorrichtungen, wobei die erste auf Höhe der Blattspitze, wenn diese den Turm passiert, also bei 6-Uhr-Stellung des betreffenden Rotorblatts, die zweite direkt unterhalb der Gondel und die dritte mittig zwischen der ersten und der zweiten angeordnet ist, stellt eine besonders bevorzugte Ausführungsform für die vorgeschlagenen Verfahren dar.

Erfindungsgemäß wird eine Windenergieanlage mit einem Turm und wenigstens einem aerodynamischen Rotor mit wenigstens einem Rotorblatt vorgeschlagen, wobei die Windenergieanlage eine Messanordnung gemäß wenigstens einer der vorstehenden Ausführungsformen aufweist, insbesondere an ihrem Turm aufweist.

Der Turm der Windenergieanlage kann hierbei jede beliebige Bauweise aufweisen. Grundsätzlich kommen neben Stahlrohr- und Hybridtürmen auch Gittertürme in Betracht um nur einige Beispiele zu nennen.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer eine Messanordnung aufweisenden Windenergieanlage.
- Fig. 2: zeigt eine schematische Ansicht einer Drucksensorfolie.
- Fig. 3: zeigt eine schematische Ansicht einer eine besonders bevorzugte Ausführungsform einer Messanordnung aufweisenden Windenergieanlage.
- Fig. 4: zeigt schematisch einen Verlauf des Winddruckes an einer piezoelektrischen Drucksensorfolie.
- Fig. 5: zeigt schematisch einen Verlauf des Windruckes an drei um einen Turm angeordnet piezoelektrischen Drucksensorfolien.
- Fig. 6: zeigt schematisch einen Verlauf des Winddrucks an einer piezoelektrischen Drucksensorfolie im Querschnitt
- Fig. 7A: zeigt einen Verlauf von Windturbulenzen an einer Windenergieanlage.
- Fig. 7B: zeigt einen Verlauf von wind-shear und wind-veer an einer Windenergieanlage.
- Fig. 7C: zeigt einen Verlauf von wind-veer an einer Windenergieanlage über mehrere Wochen.
- Fig. 7D: zeigt einen gemittelten wind-veer zwischen Nabenhöhe und Tip, Tag und Nacht, an einer Windenergieanlage.

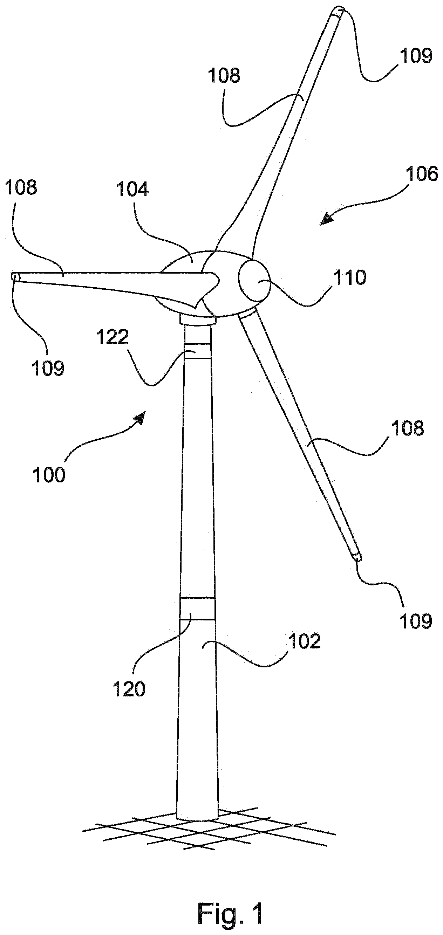

Fig. 1 zeigt eine Windenergieanlage 100 mit einem Turm 102 und einer Gondel 104. An der Gondel 104 ist ein aerodynamischer Rotor 106 mit Rotorblättern 108, die jeweils eine Blattspitze 109 aufweisen, und ein Spinner 110 angeordnet. Der Rotor 106 wird im Betrieb durch den Wind in eine Drehbewegung versetzt und treibt dadurch einen Generator in der Gondel 104 an.

Ferner sind am Turm 102 der Windenergieanlage 100 zwei Messvorrichtungen 120 und 122 in unterschiedlichen Höhen so angeordnet, dass sie in der jeweiligen Höhe, in der sie angeordnet sind, zu unterschiedlichen horizontalen Richtungen Windwerte erfassen, die repräsentativ für einen Winddruck aus der jeweiligen Richtung sind.

Die erste Messvorrichtung 120 ist hierbei am Turm und unterhalb der zweiten Messvorrichtung 122 so angeordnet, dass sowohl die erste als auch die zweite Messvorrichtung 120 und 122 innerhalb der Rotorkreisfläche liegen. Die erste Messvorrichtung 120 ist weit unten in einem Bereich angeordnet, in dem die jeweiligen Blattspitzen 109 den Turm passieren. Die zweite Messvorrichtung 122 ist unmittelbar unterhalb der Gondel 104 angeordnet.

Ferner sind die erste und die zweite Messvorrichtungen 120 und 122 als Band um den Turm herum so angeordnet, dass jede Messvorrichtung einen richtungsabhängigen Druckverlauf in einer 360° horizontalen Richtung erfassen kann.

Die erste und die zweite Messvorrichtungen 120 und 122 bilden damit im Wesentlichen eine Messanordnung gemäß einer Ausführungsform, wobei noch Elemente zur Datenübertragung und Datenauswertung hinzukommen können.

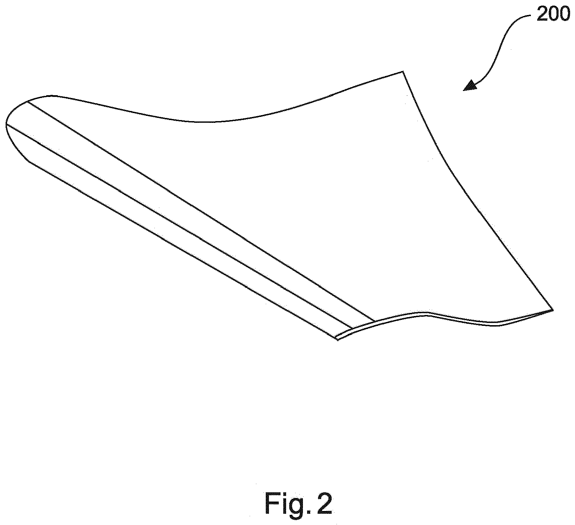

Fig. 2 zeigt eine schematische Ansicht eines Abschnitts einer Drucksensorfolie 200, die als Messvorrichtung am Turm angeordnet werden kann.

Die Drucksensorfolie 200 ist dabei insbesondere als piezoelektrische Folie bzw. als Nanosensorfolie ausgeführt und weist einen dünnen und im Wesentlichen bahnartigen Aufbau auf, der eine besonders einfache Installation am Turm der Windenergieanlage ermöglicht, beispielsweise durch Aufkleben. Piezoelektrische Folien können dabei unter 100 µm dünn sein, eine Breite von über 30cm und nahezu jede beliebige Länge aufweisen.

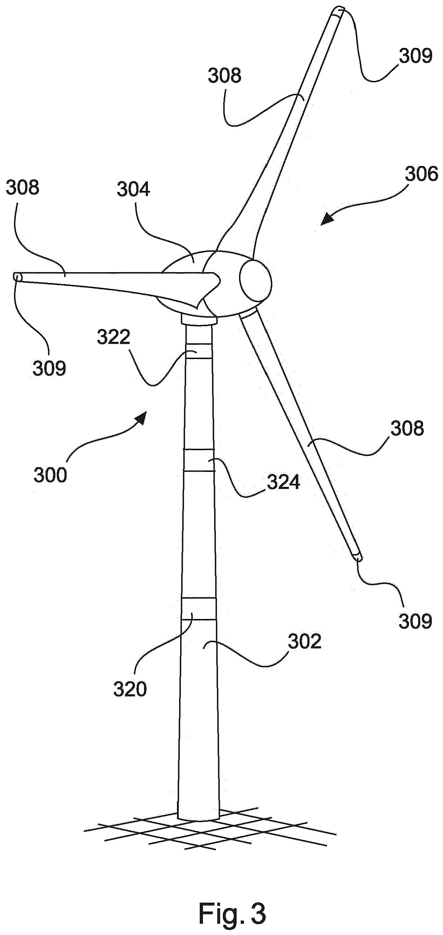

Fig. 3 zeigt eine schematische Ansicht einer Windenergieanlage 300 gemäß einer weiteren Ausführungsform, die eine Messanordnung aufweist, die drei Messvorrichtungen, nämlich drei piezoelektrische Drucksensorfolien 320, 322 und 324 umfasst. Die drei piezoelektrischen Drucksensorfolien sind hierbei als Band um den Turm 302 herum angeordnet.

Die erste piezoelektrische Drucksensorfolie 320 ist auch hier in einer Höhe am Turm 302 angeordnet, in der die Blattspitze 309, die auch als Tip bezeichnet werden kann, den Turm 302 beim Drehen des Rotors 306 passiert. Demnach ist die erste piezoelektrische Drucksensorfolie 320 am unteren Rand der Rotorkreisfläche, die von den Rotorblätter 308 überstrichen wird, angeordnet.

Die zweite piezoelektrische Drucksensorfolie 322 ist am Turm 302 direkt unterhalb der Gondel 304 um den Turm herum angeordnet.

Die dritte piezoelektrische Drucksensorfolie 324 ist am Turm 302 mittig zwischen der ersten und der zweiten piezoelektrischen Drucksensorfolie um den Turm herum angeordnet.

Somit ist die Messanordnung dazu vorbereitet, wenigstens einen Wert der Windscherung über die Höhe und/oder wenigstens einen Wert der Windrichtungsänderung über die Höhe zu erfassen.

Bei dieser Anordnung kann gegenüber der Ausführungsform der Figur 1 eine höhere Genauigkeit erreicht werden. Es können mit guter Genauigkeit wind-veer- und wind-shear-Werte aufgenommen werden, obwohl der Aufbau vergleichsweise einfach und kostengünstig ausgeführt ist. Es bedarf nur dreier Drucksensorfolien und einer Auswerteeinheit.

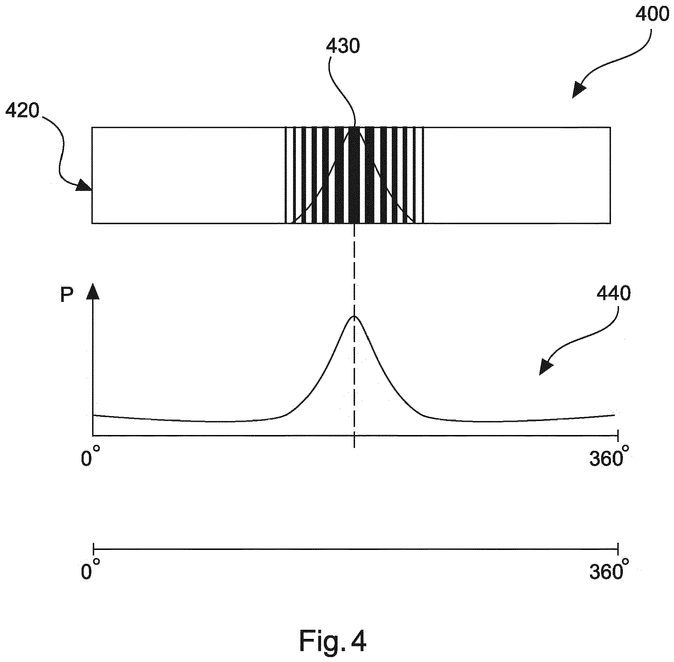

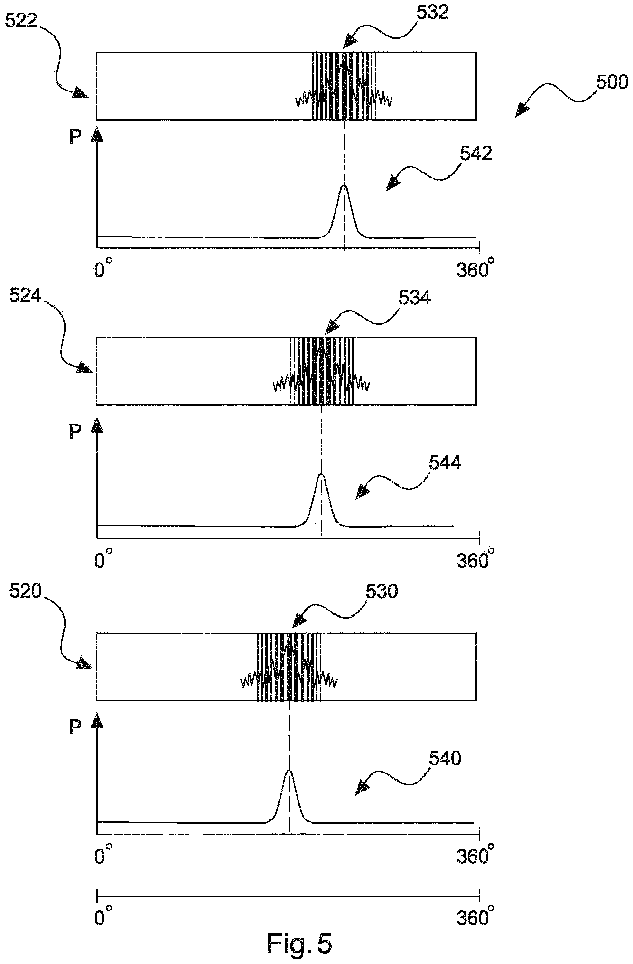

Fig. 4 zeigt schematisch in unterschiedlichen Darstellungsarten eine Verteilung des Winddruckes 400, bzw. 440, einer den Turm umlaufenden Drucksensorfolie 420. Die Darstellung der Fig. 4 - und gleiches gilt für die Darstellungen der Fig. 5 - zeigt jeweils in einem oberen Teil der Figur eine Draufsicht auf die betreffende Drucksensorfolie und illustriert den jeweiligen Druck, nämlich in einer Darstellungsart eine Druckintensität auf der jeweiligen Drucksensorfolie 420, bzw. 520, 522 und 524, durch entsprechende schwarze Farbintensität bzw. Dichte der schwarzen Punkte. Jeweils in einer darunter liegenden Darstellung ist der erfasste Druck P als Diagramm über die Länge der Drucksensorfolie 420 bzw. 520, 522 und 524 abgetragen.

Die Drucksensorfolie 420 umläuft hierbei den Turm vollständig, also von 0° bis 360° Grad horizontal, ist aber in der Fig. 4 bzw. in den Figuren 5, als abgerollte Drucksensorfolie 420 bzw. Drucksensorfolie 520, 522 und 524 dargestellt. Somit ist die Drucksensorfolie dazu vorbereitet die Verteilung des Windruckes um den Turm herum, nämlich in 360° Grad horizontaler Richtung, abzubilden. Eine so um den Turm angeordnete Drucksensorfolie weist eine Vielzahl von Windwerten auf, die jeweils repräsentativ zu einem Winddruck sind. Ferner weist die Vielzahl der Windwerte einen größten Windwert 430 auf, der als Windrichtung angenommen wird und hier etwas bei 180° liegt.

Fig. 5 zeigt schematisch in unterschiedlichen Darstellungsarten jeweils einen Verlauf des Windruckes 500 bzw. 540, 542 und 544 an drei um einen Turm in unterschiedlichen Höhen angeordnete piezoelektrische Drucksensorfolien 520, 522 und 524. Die drei piezoelektrischen Drucksensorfolien 520, 522 und 524 umlaufen hierbei den Turm vollständig von 0° bis 360° Grad horizontal, aber in unterschiedlichen Höhen, wie es in Figur 3 gezeigt ist, wobei die Folien 520, 522 und 524 den Folien 320, 322 und 324 gemäß Figur 3 entsprechen. Jede der Drucksensorfolien weist einen größten Windwert 530, 532 und 534 in unterschiedlichen horizontalen Richtungen auf. Diese jeweilige Richtung wird als Windrichtung der jeweiligen Höhe angenommen, in der nämlich die Drucksensorfolie angeordnet ist.

Es liegen dadurch in unterschiedlichen Höhen unterschiedliche Windrichtungen und ggf. mit unterschiedlichen Druckwerten vor. Daraus können unterschiedliche Windstärken abgeleitet werden, die über die Höhe unterschiedlich sind und sich damit zum Berechnen eines wind-shear-Wertes bzw. eines wind-shear-Verlaufs eignen. Aus der jeweiligen Windrichtung der jeweiligen Höhe wird wenigstens ein wind-shear-Wert ermittelt. Die so ermittelten wind-shear- und/oder wind-veer-Werte können anschließend für die gesamte Rotorkreisfläche extrapoliert werden. Auch kann aus den so ermittelten wind-shear- und/oder wind-veer-Werten ein wind-shear- und/oder wind-veer-Profil erstellt werden, mit dem eine Steuerung der Windenergieanlage verbessert werden kann.

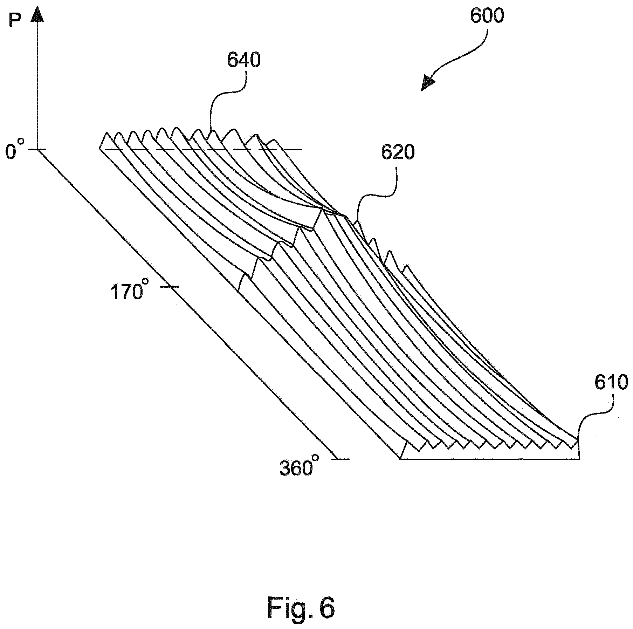

Fig. 6 zeigt einen Verlauf des Winddrucks an einer piezoelektrischen Drucksensorfolie im Querschnitt 600. Die Folie ist hierbei 360° horizontal an einer Windenergieanlage in einer Höhe um den Turm herum angeordnet.

Die Druckkurven 610, 620 und 640 zeigen hierbei exemplarisch den Druckverlauf quer zur Drucksensorfolie, also entlang der Höhe des Turmes.

Auf Grund des Aufbaus und/oder der Funktionsweise des Sensors kann es dazu kommen, dass der erfasste Winddruck beispielsweise am oberen und/oder unteren Rand des Sensors abfällt, also ungenau gemessen wurde, wie die Kurve 620 exemplarisch zeigt. Solche und andere absoluten Messungenauigkeiten können aber auf einfache Weise herausgefiltert werden.

Ferner weist der Sektor um 170° horizontaler Richtung die größten Drücke auf, also entspricht dieser Sektor der Windrichtung. Demnach kommt der Wind gemittelt aus 170° horizontaler Richtung.

Ferner zeigt Fig. 6 auch, dass der größte Druckwert nicht auf einen einzigen Wert beschränkt ist, vielmehr wird der größte Druckwert aus einer Vielzahl von Druckwerten oberhalb eines vorbestimmten Schwellenwertes ermittelt und anschließend aus dem so bestimmten größten Druckwert die Windrichtung bestimmt.

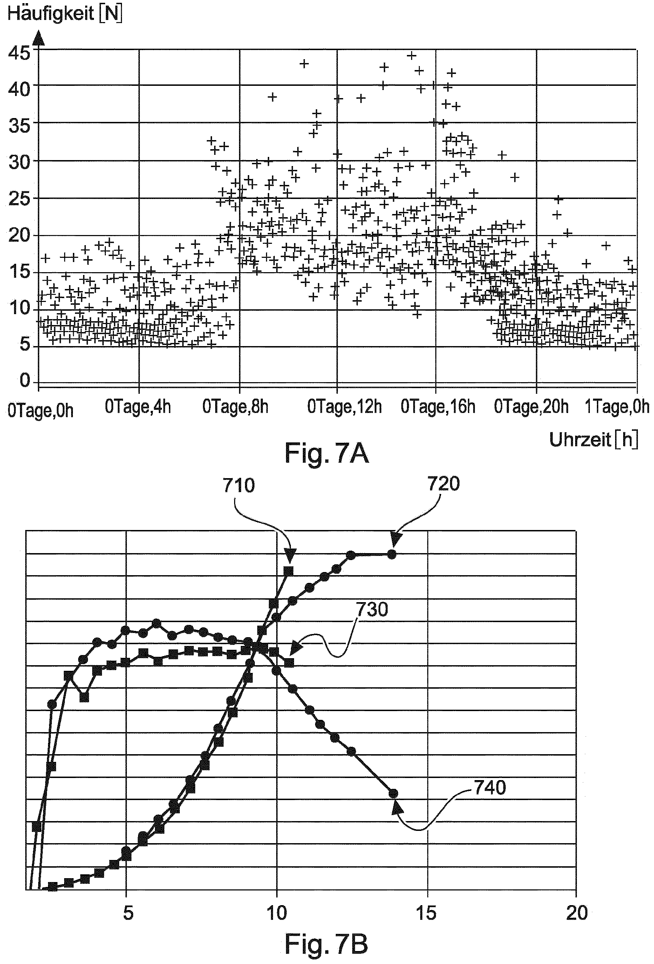

Fig. 7A zeigt einen Verlauf von Windturbulenzen an einer Windenergieanlage über den Zeitraum eines Tages. Insbesondere tagsüber, zwischen 8 und 20 Uhr, weist der Wind eine hohe Anzahl an Turbulenzen auf. Das Auftreten von solchen Windturbulenzen ist nicht nur auf komplexe Standorte, begrenzt. Vielmehr treten Windturbulenzen an allen Standorten auf, die eine instabile bzw. windige Atmosphäre aufweisen.

Fig. 7B zeigt einen Verlauf von wind-shear und wind-veer an einer Windenergieanlage über den Zeitraum eines Tages. Die Kurve 710 zeigt den Nachtverlauf des wind-veer und die Kurve 730 Tagverlauf. Die Kurve 720 zeigt den Verlauf des wind-shear bei Nacht und die Kurve 740 bei Tag.

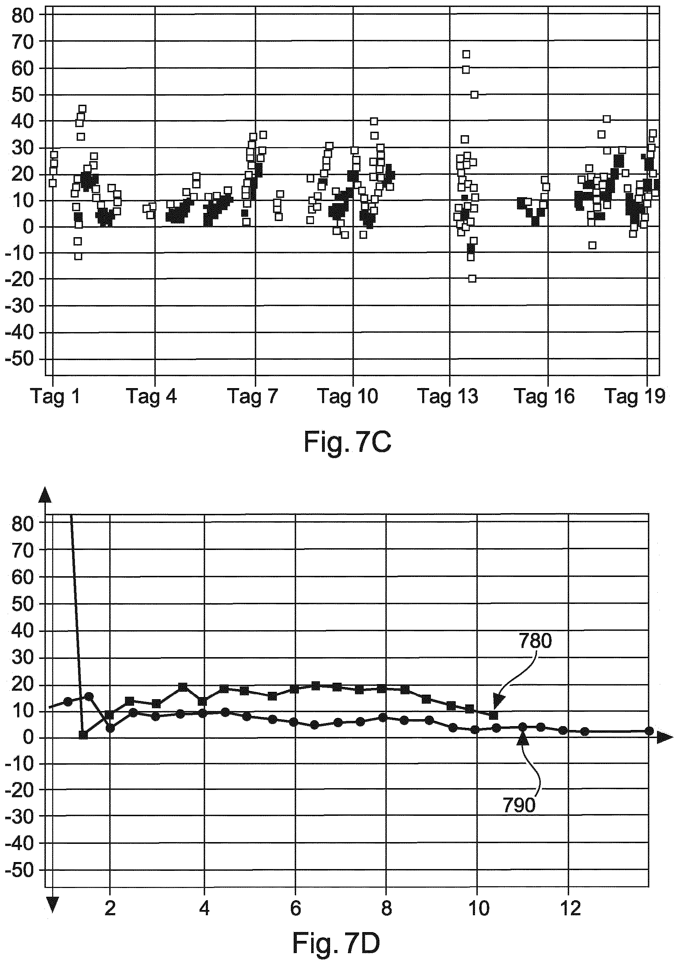

Fig. 7C zeigt einen Verlauf von wind-veer an einer Windenergieanlage über mehrere Wochen.

Fig. 7D zeigt einen gemittelten wind-veer-Verlauf zwischen Nabenhöhe und Tip an einer Windenergieanlage, Tag 790 und Nacht 780. Diese Werte wurden mit einem sehr aufwendigen Verfahren aufgenommen und zeigen insbesondere die Notwendigkeit einer erfindungsgemäßen wind-veer-Erfassung. Die aufgenommenen Werte wurden für eine statistische Aussage bin-gemittelt, also mittels sogenanntem "binning" quantisiert.

Um die in den Fig. 7A bis 7D gezeigten negativen Einflüsse auf die Leistungskurve einer Windenergieanlage zu minimieren bzw. zu kompensieren, wird vorgeschlagen, die Regelung der Windenergieanlage so anzupassen, dass der Effekt der Windscherung und/oder der Windrichtungsänderung über die Höhe, keinen negativen Einfluss auf den Ertrag bzw. die Leistungsbeiwerte der Windenergieanlage hat. Hierzu werden wenigstens ein Verfahren und/oder eine Anordnung und/oder Vorrichtung nach einem der vorstehenden Ansprüche vorgeschlagen.

Durch eine so vorgeschlagene Messanordnung kann beispielsweise die Windrichtung auf eine besonders einfache Art bestimmt werden, da der höchste bzw. größte von einem Sensor gemessene Druck der Windrichtung entspricht.

Auch kann die Proportionalität - je höher der Druck, desto höher die Windgeschwindigkeit - als zusätzliche Indikation dazu verwendet werden, eine entsprechende Windgeschwindigkeit zu bestimmen, beispielsweise durch empirische Datensammlung in Kombination mit einem Look-Up-Table oder durch vorherige Kalibrierung der Anordnung beispielsweise mittels eines bereits auf dem Dach der Gondel vorinstallierten Anemometers.

Die absolute Genauigkeit der verwendeten Messsensoren kann dabei sekundär sein, jedenfalls dann, wenn insbesondere der relative Verlauf des wind-veer und des wind-shear durch die Rotorkreisfläche von Bedeutung ist.

Die durch eine solche Anordnung erzeugten Messwerte können ferner auch zusätzlich gefiltert werden. Beispielsweise kann, um den Einfluss vorbeilaufender Rotorblätter auf die Messanordnung zu minimieren, die Messanordnung mit dem Rotorblattpositionssystem der Windenergieanlage gekoppelt werden. Aber auch andere Vorrichtungen und/oder Verfahren zum Filtern der erfassten Daten sind denkbar.

Die so gefilterten Daten können ferner gemittelt, insbesondere bin-gemittelt werden und zum Steuern der Pitch- und/oder Azimutwinkel verwendet werden.

Beispielsweise kann der Pitchwinkel der einzelnen Rotorblätter abhängig von der Höhe um 1° oder 3° oder mehr Grad über die Höhe gestellt werden. Auch denkbar ist, bei sehr starken wind-veer und/oder wind-shear die gesamte Windenergieanlage über den Azimut in und/oder aus dem Wind zu drehen, beispielsweise um 1° Azimut bei 10% wind-shear über die Höhe der Rotorkreisfläche.

## Patentansprüche

1. Messanordnung einer einen Turm (102) und einen aerodynamischen Rotor (106) mit wenigstens einem Rotorblatt (108) aufweisenden Windenergieanlage (100) zum Erfassen von Windverhältnissen, umfassend
- wenigstens eine erste und zweite Messvorrichtung (120, 122) zum Anordnen am Turm (102) in unterschiedlichen Höhen, und wobei
- jede Messvorrichtung vorbereitet ist, in der jeweiligen Höhe, in der sie anzuordnen ist, zu unterschiedlichen horizontalen Richtungen Windwerte zu erfassen, die repräsentativ für einen Winddruck aus der jeweiligen Richtung sind, **dadurch gekennzeichnet, dass** jede Messvorrichtung eine Drucksensorfolie umfasst, die dazu vorbereitet ist, einen richtungsabhängigen Druckverlauf zu erfassen.

2. Messanordnung nach Anspruch 1, **dadurch gekennzeichnet, dass** die wenigstens eine erste und zweite Messvorrichtung (120, 122) zum Anordnen um den Turm (102) herum vorbereitet ist und/oder dass als Windwert jeweils der Winddruck erfasst wird.

3. Messanordnung nach einem der vorstehenden Ansprüche, **dadurch gekennzeichnet, dass** die Drucksensorfolie eine piezoelektrische Folie oder eine Nanosensorfolie ist.

4. Messanordnung nach einem der vorstehenden Ansprüche, **dadurch gekennzeichnet, dass** das wenigstens eine Rotorblatt (108) eine Blattspitze (109) aufweist und die erste Messvorrichtung (120) in einer Höhe am Turm (102) angeordnet ist, in der die Blattspitze (109) den Turm (102) beim Drehen des Rotors passiert.

5. Messanordnung nach einem der vorstehenden Ansprüche, **dadurch gekennzeichnet, dass** die zweite Messvorrichtung (122) oberhalb der ersten Messvorrichtung (120), insbesondere direkt unterhalb einer Gondel (104) der Windenergieanlage (100), angeordnet ist.

6. Messanordnung nach einem der vorstehenden Ansprüche, **dadurch gekennzeichnet, dass** die Messanordnung wenigstens eine dritte Messvorrichtung (324) aufweist zum Anordnen am Turm (302) in einer Höhe zwischen der ersten und der zweiten Messvorrichtung (320, 322).

7. Messanordnung nach einem der vorstehenden Ansprüche, vorbereitet zum Erfassen wenigstens eines Wertes einer Windscherung über die Höhe (wind-shear) und/oder wenigstens eines Wertes einer Windrichtungsänderung über die Höhe (wind-veer).

8. Messanordnung nach einem der vorstehenden Ansprüche, **dadurch gekennzeichnet, dass** sie dazu vorbereitet ist, aus den Werten, die die Messanordnung aufnimmt, ein Maß für eine Windturbulenz zu bestimmen.

9. Verfahren zum Erfassen von Windverhältnissen an einer einen Turm (102) und einen aerodynamischen Rotor (106) mit wenigstens einem Rotorblatt (108) aufweisenden Windenergieanlage (100), wobei
- Windwerte am Turm (102) in unterschiedlichen Höhen erfasst werden, und
- in den unterschiedlichen Höhen zu unterschiedlichen horizontalen Richtungen richtungsabhängige Windwerte aufgenommen werden, wobei
- die Windwerte repräsentativ für einen Winddruck aus der jeweiligen horizontalen Richtung sind, und wobei
eine Messanordnung nach einem der Ansprüche 1 bis 8 verwendet wird.

10. Verfahren zum Betreiben einer Windenergieanlage (100), wobei die Windenergieanlage (100) in Abhängigkeit der nach Anspruch 9 erfassten Windverhältnisse betrieben wird.

11. Verfahren nach einem der Ansprüche 9 oder 10, **dadurch gekennzeichnet, dass** wenigstens in der ersten und der zweiten Höhe jeweils eine Windrichtung ermittelt wird und daraus eine Windrichtungsänderung über die Höhe (wind-veer) qualitativ und/oder quantitativ bestimmt wird.

12. Verfahren nach einem der Ansprüche 9 bis 11, **dadurch gekennzeichnet, dass** wenigstens in der jeweiligen Höhe die horizontale Richtung mit dem größten Windwert als Windrichtung der jeweiligen Höhe angenommen wird.

13. Verfahren nach einem der Ansprüche 9 bis 12, **dadurch gekennzeichnet, dass** wenigstens in der ersten und zweiten Höhe eine Windgeschwindigkeit ermittelt wird und daraus eine Windscherung über die Höhe (wind-shear) abgeleitet wird.

14. Verfahren nach einem der Ansprüche 9 bis 13, **dadurch gekennzeichnet, dass** eine Windgeschwindigkeit der jeweiligen Höhe jeweils aus dem größten Windwert der jeweiligen Höhe abgeleitet wird.

15. Verfahren nach einem der Ansprüche 9 bis 14, **dadurch gekennzeichnet, dass** aus der Windrichtungsänderung über die Höhe (wind-veer) und/oder der Windscherung über die Höhe (wind-shear) ein wind-veer-Profil bzw. ein wind-shear-Profil für eine Rotorkreisfläche der Windenergieanlage (100) berechnet wird, insbesondere durch Inter- und/oder Extrapolieren.

16. Verfahren nach einem der Ansprüche 9 bis 15, **dadurch gekennzeichnet, dass** abhängig von wenigstens einem Wert, Größe und/oder Kriterium der Liste umfassend:
- einen wind-shear-Wert,
- einen wind-veer-Wert,
- ein wind-shear-Profil und
- ein wind-veer-Profil
wenigstens ein Azimut- und/oder ein Pitchwinkel der Windenergieanlage (100) verändert wird.

17. Windenergieanlage (100) mit einem Turm (102) und wenigstens einem aerodynamischen Rotor (106) mit wenigstens einem Rotorblatt (108), **dadurch gekennzeichnet, dass** eine Messanordnung nach einem der Ansprüche 1 bis 8 vorgesehen ist.

## Claims

1. Measuring arrangement of a wind power plant (100) having a tower (102) and an aerodynamic rotor (106) with at least one rotor blade (108), for sensing wind conditions, comprising
- at least a first and a second measuring device (120, 122) for arrangement at different heights on the tower (102), and wherein
- each measuring device is prepared so as to sense, at the respective height at which it is to be arranged, wind values for different horizontal directions, said values being representative of a wind pressure from the respective direction, **characterized in that** each measuring device comprises a pressure sensor film which is prepared so as to sense a direction-dependent pressure profile.

2. Measuring arrangement according to Claim 1, **characterized in that** the at least one first and second measuring device (120, 122) is prepared for arrangement around the tower (102) and/or **in that** in each case the wind pressure is sensed as a wind value.

3. Measuring arrangement according to one of the preceding claims, **characterized in that** the pressure sensor film is a piezo-electric film or a nanosensor film.

4. Measuring arrangement according to one of the preceding claims, **characterized in that** the at least one rotor blade (108) has a blade tip (109), and the first measuring device (120) is arranged at a height on the tower (102) at which the blade tip (109) passes the tower (102) during the rotation of the rotor.

5. Measuring arrangement according to one of the preceding claims, **characterized in that** the second measuring device (122) is arranged above the first measuring device (120), in particular directly underneath a gondola (104) of the wind power plant (100).

6. Measuring arrangement according to one of the preceding claims, **characterized in that** the measuring arrangement has at least a third measuring device (324) for arrangement on the tower (302) at a height between the first and second measuring devices (320, 322).

7. Measuring arrangement according to one of the preceding claims, prepared so as to sense at least one value of a wind shear over the height and/or at least one value of a change in wind direction over the height (wind veer).

8. Measuring arrangement according to one of the preceding claims, **characterized in that** it is prepared so as to determine a measure of wind turbulence from the values which the measuring arrangement records.

9. Method for sensing wind conditions at a wind power plant (100) having a tower (102) and an aerodynamic rotor (106) with at least one rotor blade (108), wherein
- wind values are sensed at different heights on the tower (102) and
- direction-dependent wind values are recorded for different horizontal directions at the different heights, wherein
- the wind values are representative of a wind pressure from the respective horizontal direction, and wherein
- a measuring arrangement is provided according to one of claims 1 to 8.

10. Method for operating a wind power plant (100), wherein the wind power plant (100) is operated as a function of the wind conditions sensed according to Claim 9.

11. Method according to one of Claims 9 or 10, **characterized in that** a wind direction is determined at least at the first height and at the second height respectively, and a change of wind direction over the height (wind veer) is determined therefrom qualitatively and/or quantitatively.

12. Method according to one of Claims 9 to 11, **characterized in that**, at least at the respective height, the horizontal direction with the largest wind value is assumed to be the wind direction at the respective height.

13. Method according to one of Claims 9 to 12, **characterized in that**, at least at the first height and the second height, a wind speed is determined, and a wind shear over the height is derived therefrom.

14. Method according to one of Claims 9 to 13, **characterized in that** a wind speed at the respective height is derived in each case from the largest wind value at the respective height.

15. Method according to one of Claims 9 to 14, **characterized in that** a wind veer profile or a wind shear profile is calculated from the change of wind direction over the height (wind veer) and/or the wind shear over the height for a swept rotor area of the wind power plant (100), in particular by interpolation and/or extrapolation.

16. Method according to one of Claims 9 to 15, **characterized in that** at least one azimuth angle and/or one pitch angle of the wind power plant (100) is changed as a function of at least one value, variable and/or criterion of the list comprising:
- a wind shear value,
- a wind veer value,
- a wind shear profile and
- a wind veer profile.

17. Wind power plant (100) having a tower (102) and at least one aerodynamic rotor (106) with at least one rotor blade (108), **characterized in that** a measuring arrangement according to one of Claims 1 to 8 is provided.

## Revendications

1. Ensemble de mesure d'une éolienne (100) présentant une tour (102) et un rotor (106) aérodynamique avec au moins une pale de rotor (108), pour détecter des conditions en termes de vent, comprenant
- au moins un premier et un deuxième dispositif de mesure (120, 122) destinés à être disposé au niveau de la tour (102) à des hauteurs différentes, et dans lequel
- chaque dispositif de mesure est préparé, pour détecter à la hauteur respective, à laquelle il est à disposer, par rapport à différentes directions horizontales, des valeurs de vent, qui sont représentatives d'une pression de vent provenant de la direction respective,
**caractérisé en ce que**
chaque dispositif de mesure comprend un film de capteur de pression, qui est préparé pour détecter une évolution de pression dépendant de la direction.

2. Ensemble de mesure selon la revendication 1, **caractérisé en ce que** l'au moins un premier et deuxième dispositif de mesure (120, 122) sont préparés pour être disposés tout autour de la tour (102), et/ou que respectivement la pression du vent est détectée en tant que valeur du vent.

3. Ensemble de mesure selon l'une quelconque des revendications précédentes, **caractérisé en ce que** le film de capteur de pression est un film piézoélectrique ou un film de nanocapteur.

4. Ensemble de mesure selon l'une quelconque des revendications précédentes, **caractérisé en ce que** l'au moins une pale de rotor (108) présente une pointe de pale (109) et le premier dispositif de mesure (120) est disposé à une hauteur au niveau de la tour (102), à laquelle la pointe de pale (109) franchit la tour (102) lors de la rotation du rotor.

5. Ensemble de mesure selon l'une quelconque des revendications précédentes, **caractérisé en ce que** le deuxième dispositif de mesure (122) est disposé au-dessus du premier dispositif de mesure (120), en particulier directement sous une nacelle (104) de l'éolienne (100).

6. Ensemble de mesure selon l'une quelconque des revendications précédentes, **caractérisé en ce que** l'ensemble de mesure présente au moins un troisième dispositif de mesure (324) destiné à être disposé au niveau de la tour (302) à une hauteur entre le premier et le deuxième dispositif de mesure (320, 322).

7. Ensemble de mesure selon l'une quelconque des revendications précédentes, préparé pour détecter au moins une valeur d'un cisaillement du vent sur la hauteur (wind-shear) et/ou au moins une valeur d'un changement de direction du vent sur la hauteur (wind-veer).

8. Ensemble de mesure selon l'une quelconque des revendications précédentes, **caractérisé en ce qu'**il est préparé pour définir à partir des valeurs, que l'ensemble de mesure enregistre, une mesure pour une turbulence du vent.

9. Procédé pour détecter des conditions en termes de vent au niveau d'une éolienne (100) présentant une tour (102) et un rotor (106) aérodynamique avec au moins une pale de rotor (108), dans lequel
- des valeurs de vent sont détectées au niveau de la tour (102) à des hauteurs différentes, et
- des valeurs de vent dépendant de la direction sont enregistrées aux différentes hauteurs par rapport à différentes directions horizontales, dans lequel
- les valeurs de vent sont représentatives d'une pression de vent provenant de la direction horizontale respective, et dans lequel
un ensemble de mesure selon l'une quelconque des revendications 1 à 8 est utilisé.

10. Procédé pour faire fonctionner une éolienne (100), dans lequel l'éolienne (100) fonctionne en fonction des conditions en termes de vent détectées selon la revendication 9.

11. Procédé selon l'une quelconque des revendications 9 ou 10, **caractérisé en ce que** respectivement une direction du vent est déterminée au moins à la première et à la deuxième hauteur et un changement de direction du vent sur la hauteur (wind-veer) est défini de manière qualitative et/ou quantitative sur cette base.

12. Procédé selon l'une quelconque des revendications 9 à 11, **caractérisé en ce qu'**au moins à la hauteur concernée, la direction horizontale avec la valeur du vent la plus importante est considérée comme la direction du vent de la hauteur concernée.

13. Procédé selon l'une quelconque des revendications 9 à 12, **caractérisé en ce qu'**une vitesse du vent est déterminée au moins à la première et à la deuxième hauteur et un cisaillement du vent sur la hauteur (wind-shear) est déduit sur cette base.

14. Procédé selon l'une quelconque des revendications 9 à 13, **caractérisé en ce qu'**une vitesse du vent de la hauteur concernée est déduite respectivement à partir de la valeur du vent la plus importante de la hauteur concernée.

15. Procédé selon l'une quelconque des revendications 9 à 14, **caractérisé en ce qu'**un profil wind-veer ou un profil wind-shear est calculé pour une surface circulaire de rotor de l'éolienne (100), en particulier par interpolation et/ou extrapolation, à partir du changement de direction du vent sur la hauteur (wind-veer) et/ou du cisaillement du vent sur la hauteur (wind-shear).

16. Procédé selon l'une quelconque des revendications 9 à 15, **caractérisé en ce qu'**en fonction d'au moins une valeur, une grandeur et/ou un critère de la liste comprenant :
- une valeur wind-shear,
- une valeur wind-veer
- un profil wind-shear et
- un profil wind-veer
au moins un angle d'azimut et/ou de pas de l'éolienne (100) est modifié.

17. Éolienne (100) avec une tour (102) et au moins un rotor (106) aérodynamique avec au moins une pale de rotor (108), **caractérisée en ce qu'**un ensemble de mesure selon l'une quelconque de revendications 1 à 8 est prévu.
